# EUROPÄISCHE PATENTSCHRIFT

(11) **EP 1 344 665 B1**
(45) Veröffentlichungstag und Bekanntmachung des Hinweises auf die Patenterteilung: **08.02.2006**
(21) Anmeldenummer: 02026286.1
(22) Anmeldetag: 27.11.2002
(51) Int. Cl.: B60H 1/22

(54) **Wärmetauscheranordnung, insbesondere für ein Fahrzeugheizgerät**
Heat exchanger assembly, in particular for a vehicle heater
Ensemble d'échangeur de chaleur, en particulier pour dispositif de chauffage pour véhicule

(30) Priorität: 12.03.2002 DE 10210734
(43) Veröffentlichungstag der Anmeldung: 17.09.2003
(73) Patentinhaber: J. Eberspächer GmbH & Co. KG, 73730 Esslingen (DE)
(72) Erfinder: Knies, Tobias, 71394 Kernen (DE); Collmer, Andreas, 73760 Ostfildern (DE)

(56) Entgegenhaltungen:
- EP-A- 0 316 237
- DE-A- 2 600 621
- US-A- 4 590 888
- US-B1- 6 318 170

## Beschreibung

Die vorliegende Erfindung betrifft entsprechend dem Oberbegriff des Anspruchs 1 eine Wärmetauscheranordnung für ein Fahrzeugheizgerät mit zwei ineinandergesetzten Gehäuseteilen die im Folgenden als "Heizrohr" (innen) und als "Außenmantel" (außen) bezeichnet werden. Zwischen diesen ist ein Fluidströmungsraum gebildet. Die beiden Gehäuseteile sind an einem Verbindungsbereich miteinander fluiddicht verklebt.

Derartige Wärmetauscheranordnungen sind beispielsweise aus Dokument US 4 590 888 bekannt. Dort ist gezeigt, dass im Verbindungsbereich Heizrohr und Außenmantel jeweils Flansche mit komplementär ausgebildeten Klebeflächen aufweisen, auf die ein trocknender Klebelack aufgetragen wird, bevor die beiden Gehäuseteile zusammengefügt werden. Die beiden Klebeflächen bilden insgesamt einen L-förmigen, in Umfangsrichtung umlaufenden Klebstofflagenbereich, der aus einer im Wesentlichen zylindrischen Umfangsfläche sowie einer daran senkrecht anschließenden Ringfläche gebildet ist. Diese Ausbildung soll eine möglichst genaue Positionierung der ineinander zu verklebenden Gehäuseteile zueinander ermöglichen. Beim Zusammenfügen der beiden Gehäuseteile dieser Anordnung wird jedoch an der Umfangsfläche aufgetragener Klebstoff abgezogen und zur Ringfläche hin befördert mit der Folge, dass der dort angesammelte überschüssige Klebstoff die Ausbildung einer reproduzierbar fluiddichten Klebeverbindung zwischen Außenmantel und eingesetztem Heizrohr behindert.

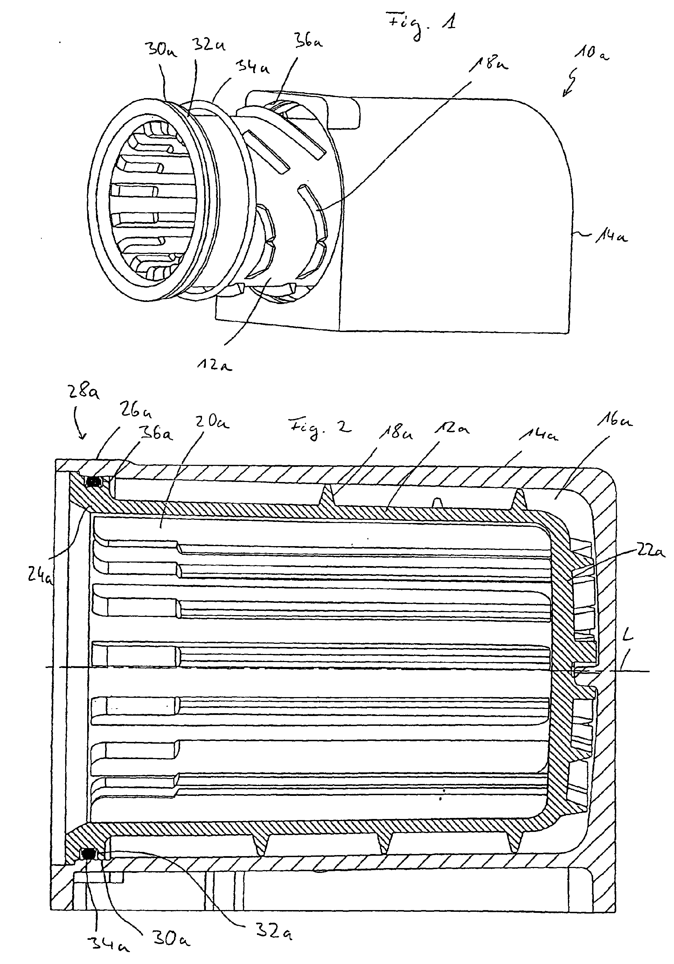

In den Fig. 1 und 2 ist eine derartige bekannte Wärmetauscheranordnung dargestellt, welche vor allem Einsatz findet bei einem als Standheizung oder Zusatzheizung betreibbaren Fahrzeugheizgerät. Die allgemein mit dem Bezugszeichen 10a bezeichnete Wärmetauscheranordnung umfasst zwei Gehäuseteile 12a und 14a. Wie die in Fig. 2 erkennbare Schnittdarstellung zeigt, sind die beiden Gehäuseteile 12a und 14a im Wesentlichen topfartig ausgebildet und - bezogen auf eine Längsachse L derselben - ineinander eingesetzt. Die beiden Gehäuseteile 12a und 14a begrenzen somit zwischen sich einen an deren Form angepassten Fluidströmungsraum 16a. Dieser Fluidströmungsraum 16a wird von einem zu erwärmenden Fluid durchströmt, wobei beispielsweise am Gehäuseteil 12a an der dem Gehäuseteil 14a zugewandten Außenseite rippenartige Vorsprünge 18a ausgebildet sind, um einen vorbestimmten Fluidströmungsweg für das den Fluidströmungsraum 16a durchströmende Fluid vorzugeben. An seiner vom Gehäuseteil 14a abgewandt liegenden Seite weist das Gehäuseteil 12a ebenfalls rippenartige Vorsprünge 20a auf, die im Wesentlichen in Richtung der Längsachse L verlaufen und einen Strömungsweg für die entlang eines nicht dargestellten Flammrohrs in Richtung zum Bodenbereich 22a des Gehäuseteils 12a und von dort in entgegengesetzter Richtung wieder zurück strömenden, erwärmten Verbrennungsabgase vorgeben.

In ihren beiden Endbereichen 24a, 26a bilden die Gehäuseteile 12a, 14a einen um die Längsachse L umlaufenden Verbindungsbereich 28a. In diesem Verbindungsbereich weist das Gehäuseteil 12a an einer Außenumfangsfläche 30a eine Ringnut 32a auf, in welche ein ringartiges Dichtungselement 34a aus elastischem Material eingesetzt ist. Im zusammengefügten Zustand liegt nach radial außen dieses Dichtungselement an einer Innenumfangsfläche 36a des Gehäuseteils 14a an und sorgt somit für einen fluiddichten Abschluss des Fluidströmungsraums 16a im Verbindungsbereich 28a.

Um diesen Verbindungsbereich mit der erforderlichen Fertigungsgenauigkeit bereitstellen zu können, müssen die beiden im Allgemeinen im Druckgussverfahren und beispielsweise aus Aluminiummaterial hergestellten Gehäuseteile 12a, 14a nach dem Druckgießvorgang durch ein spanabhebendes Bearbeitungsverfahren nachbearbeitet werden. Insbesondere ist es erforderlich, die Nut 32a, in welcher der Dichtungsring 34a teilweise aufgenommen ist, auszudrehen. Diese Nachbearbeitung ist ein arbeits- und kostenintensiver Vorgang. Ferner hat die in den Fig. 1 und 2 dargestellte fluiddichte Verbindung der beiden Gehäuseteile den Nachteil, dass beim Ineinandereinfügen die Gefahr besteht, dass der Dichtungsring 34a beschädigt wird oder so verschoben wird, dass er eine korrekte Dichtfunktion nicht mehr erfüllen kann.

Es ist die Aufgabe der vorliegenden Erfindung, eine Wärmetauscheranordnung für ein Fahrzeugheizgerät, bereitzustellen, bei welcher bei vereinfachter Herstellbarkeit in zuverlässiger Art und Weise ein fluiddichter Abschluss eines Fluidströmungsraums erlangt werden kann.

Gemäß der vorliegenden Erfindung wird diese Aufgabe gelöst durch eine Wärmetauscheranordnung für ein Fahrzeugheizgerät, umfassend zwei zwischen sich einen Fluidströmungsraum begrenzende Gehäuseteile, wobei in einem Verbindungsbereich der beiden Gehäuseteile ein fluiddichter Abschluss des Fluidströmungsraums vorgesehen ist.

Erfindungsgemäß ist dabei weiter vorgesehen, dass die beiden Gehäuseteile in dem Verbindungsbereich durch Klebstoff miteinander verbunden sind.

Die vorliegende Erfindung geht den Weg, die beiden Gehäuseteile miteinander zu verkleben und auf diese Art und Weise neben der festen und zuverlässigen Verbindung dieser Gehäuseteile bezüglich einander auch einen zuverlässigen fluiddichten Abschluss des Fluidströmungsraums zu erlangen. Dabei nutzt die vorliegende Erfindung den Effekt, dass bei Durchführung des Verbindungsvorgangs der Klebstoff aufgrund seiner in diesem Zustand vorhandenen Anpassungsfähigkeit sich derart verteilt, dass bei Erhalt der geforderten Relativlage der beiden Gehäuseteile bezüglich einander gleichzeitig auch der geforderte fluiddichte Abschluss des Fluidströmungsraums vorliegt.

Hierzu kann vorzugsweise weiter vorgesehen sein, dass in dem Verbindungsbereich zur Erlangung des fluiddichten Abschlusses des Fluidströmungsraums wenigstens ein im Wesentlichen unterbrechungsfreier Klebstofflagebereich vorgesehen ist. Um insbesondere bei im Betrieb auftretenden Erschütterungen und damit möglicherweise induzierten Relativverlagerungen der beiden Gehäuseteile bezüglich einander einen Beibehalt der sicheren Verbindung und des fluiddichten Abschlusses des Fluidströmungsraums sicherstellen zu können, wird weiter vorgeschlagen, dass der Klebstoff nach dem Aushärten elastisch ist. Hier kann beispielsweise ein auf Silikonbasis aufgebauter Klebstoff Anwendung finden, wobei hier selbstverständlich darauf geachtet werden muss, dass der eingesetzte Klebstoff den auftretenden bzw. zu erwartenden mechanischen Anforderungen einerseits sowie auch den thermischen Belastungen andererseits gerecht wird. Eine erhöhte Sicherheit sowohl hinsichtlich der Verbindungsfestigkeit als auch hinsichtlich des fluid dichten Abschlusses des Fluidströmungsraums kann dadurch erlangt werden, dass in wenigstens einem Endbereich des Verbindungsbereichs ein Klebstoffwulst gebildet ist.

Bei der erfindungsgemäßen Wärmetauscheranordnung ist vorgesehen, dass der Verbindungsbereich an einem der Gehäuseteile eine erste Verbindungsfläche umfasst, welcher eine zweite Verbindungsfläche des anderen der Gehäuseteile unter Zwischenlagerung des Klebstoffs gegenüber liegt. Dabei ist es beispielsweise möglich, dass die beiden Gehäuseteile wenigstens bereichsweise ineinander eingesetzt sind und dass die erste Verbindungsfläche eine Innenumfangsfläche ist und die zweite Verbindungsfläche eine Außenumfangsfläche ist. Um durch die Ausgestaltung der beiden an den Gehäuseteilen gebildeten Verbindungsflächen zum einen bereits für eine bestimmte Lagevorgabe der beiden Gehäuseteile beim Zusammenfügen bezüglich einander zu sorgen und zum anderen für eine gleichmäßige Klebstoffverteilung beim Zusammenfügen zu sorgen, wird vorgeschlagen, dass die erste Verbindungsfläche und die zweite Verbindungsfläche sich in Richtung einer Längsachse der Gehäuseteile verjüngend ausgebildet sind.

Um eine sehr hohe Lagegenauigkeit der beiden Gehäuseteile bezüglich einander erlangen zu können, wird vorgeschlagen, dass an wenigstens einem der Gehäuseteile Zentriermittel vorgesehen sind, welche mit Gegen-Zentriermitteln an dem anderen der Gehäuseteile zum Zentrieren der beiden Gehäuseteile bezüglich einander zusammenwirken. Hier kann beispielsweise vorgesehen sein, dass die Zentriermittel wenigstens einen Zentriervorsprung umfassen.

Weiter ist es möglich, dass in Umfangsrichtung - bezogen auf eine Längsachse der Gehäuseteile - mehrere Zentriervorsprünge aufeinander folgen.

Die Gegen-Zentriermittel können eine Anlageoberfläche für den wenigstens einen Zentriersprung umfassen und können insbesondere derart ausgebildet sein, dass sie wenigstens einen Zylinderflächenbereich bereit stellen.

Um nicht nur die Zentrierung, d.h. die Radiallage der beiden Gehäuseteile bezüglich einer Längsachse derselben sicherstellen zu können, sondern auch dafür zu sorgen, dass in Richtung der Längsachse der beiden Gehäuseteile diese in die richtige Lage bezüglich einander gebracht werden können und in dieser auch verbleiben, wird vorgeschlagen, dass Axialpositioniermittel vorgesehen sind zum Vorgeben einer vorbestimmten Relativaxiallage der Gehäuseteile bezüglich einander, bezogen auf eine Längsachse der Gehäuseteile. Dabei kann beispielsweise vorgesehen sein, dass die Axialpositioniermittel an einem der Gehäuseteile einen - bezogen auf eine Längsachse der Gehäuseteile - vorzugsweise vollständig umlaufenden Positioniervorsprung und an dem anderen der Gehäuseteile eine - bezogen auf die Längsachse der Gehäuseteile - vorzugsweise vollständig umlaufende Positioniereinsenkung umfassen.

Gemäß einem weiteren Aspekt der vorliegenden Erfindung betrifft diese ein Verfahren zum Zusammenbau einer Wärmetauscheranordnung, welche Wärmetauscheranordnung zwei zwischen sich einen Fluidströmungsraum begrenzende Gehäuseteile umfasst, die in einem Verbindungsbereich mit jeweiligen Verbindungsflächen einander gegenüber liegend positioniert oder zu positionieren sind, wobei das Verfahren das Aufbringen von Klebstoff auf die Verbindungsfläche von wenigstens einem der Gehäuseteile und darauf folgend das Zusammenfügen der Gehäuseteile bis die beiden Verbindungsflächen einander unter Zwischenlagerung des Klebstoffs gegenüber liegen, umfasst.

Die Erfindung wird nachfolgend mit Bezug auf die beiliegenden Zeichnungen detailliert beschrieben. Es zeigt:
- Fig. 1: eine perspektivische Explosionsansicht einer bekannten Wärmetauscheranordnung;
- Fig. 2: eine Längsschnittansicht der in Fig. 1 dargestellten bekannten Wärmetauscheranordnung;
- Fig. 3: eine im Längsschnitt dargestellte Teil-Explosionsansicht einer erfindungsgemäßen Wärmetauscheranordnung;
- Fig. 4: eine Teil-Längsschnittansicht der erfindungsgemäßen Wärmetauscheranordnung nach dem Zusammenfügen zweier Gehäuseteile derselben.

Die eingangs mit Bezug auf die Fig. 1 und 2 gegebene Beschreibung des grundsätzlichen Aufbaus einer bei einem Fahrzeugheizgerät einsetzbaren Wärmetauscheranordnung ist auch für die erfindungsgemäßausgestaltete Wärmetauscheranordnung zutreffend. Es wird also hinsichtlich dieses grundsätzlichen Aufbaus auf die vorangehenden Ausführungen verwiesen. Im Folgenden wird im Wesentlichen auf die im Vergleich zu dem bekannten Aufbau bestehenden Unterschiede bei der erfindungsgemäß ausgestalteten Wärmetauscheranordnung eingegangen.

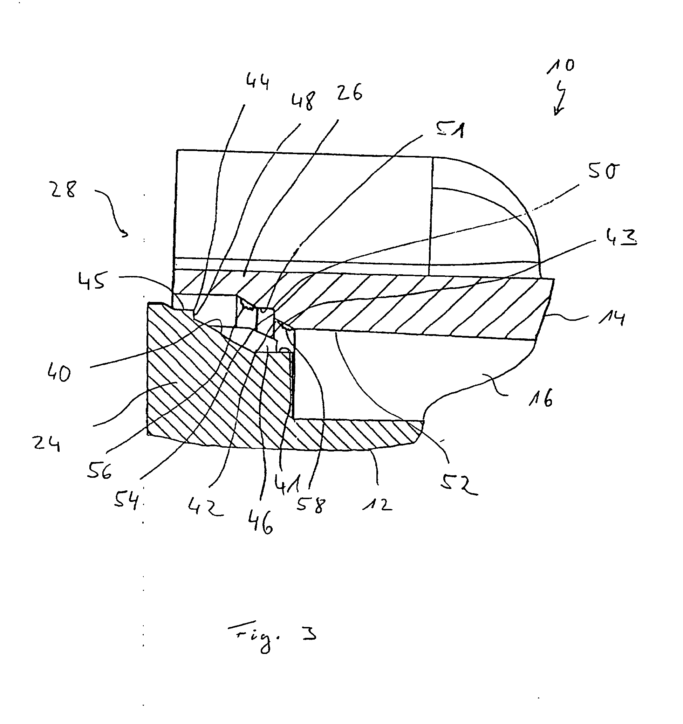

Man erkennt zunächst in Fig. 3 die beiden bereits angesprochenen Gehäuseteile 12 und 14, von welchen das innere topfartige Gehäuseteil 12 im Allgemeinen auch als Wärmetauscher bezeichnet wird und das äußere topfartige Gehäuseteil 14 im Allgemeinen auch als Wassermantel bezeichnet wird. In dem zwischen diesen beiden Gehäuseteilen 12 und 14 vorhandenen, den Fluidströmungsraum 16 bildenden Zwischenraum zirkuliert dann im Allgemeinen das als zu erwärmendes Fluid eingesetzte Wasser. In ihren miteinander in Verbindung stehenden bzw. zu bringenden Endbereichen 24, 26 bilden die beiden Gehäuseteile 12, 14 wieder den Verbindungsbereich 28, an dem der fluiddichte Abschluss des Fluidströmungsraums 16 erzeugt werden soll.

Man erkennt weiter, dass in den beiden Endbereichen 24, 26 die beiden Gehäuseteile 12, 14 mit jeweiligen zueinander komplementären, konusartig ausgebildeten Verbindungsflächen 40, 42 ausgebildet sind. Beim axialen Ineinandereinfügen der beiden Gehäuseteile 12, 14 nähern sich diese beiden Verbindungsflächen 40, 42 einander an. Um sowohl in Richtung der in Fig. 1 eingezeichneten Längsachse L der Gehäuseteile 12, 14, als auch in radialer Richtung - bezogen auf die Längsachse L - eine definierte Lage der beiden Gehäuseteile 12, 14 bezüglich einander vorgeben zu können, ist in der in Fig. 3 dargestellten Ausgestaltungsform der erfindungsgemäßen Wärmetauscheranordnung 10 an der Verbindungsfläche 40 des inneren Gehäuseteils 12, d.h. des Wärmetauschers 12, ein beispielsweise in Umfangsrichtung um die Längsachse L vollständig umlaufender Axialpositioniervorsprung 44 vorgesehen. Dieser weist nach radial außen hin eine im Wesentlichen zylindrische Außenumfangsfläche 45 auf, die in einem ihrer axialen Endbereiche in eine im Wesentlichen in Achsrichtung gerichtete Ringfläche 48 übergeht.

Diesem Axialpositioniervorsprung 44 zugeordnet ist an dem Gehäuseteil 14 eine Axialpositionierausnehmung 50 gebildet. Diese umfasst im Wesentlichen eine zylindrisch geformte Innenumfangsfläche 51, die an einem ihrer Endbereiche in eine im Wesentlichen axial gerichtete Ringfläche 54 übergeht. Die Außenumfangsfläche 45 bzw. die Innenumfangsfläche 51 sind derart aufeinander abgestimmt, dass beim bzw. nach dem Ineinandereinfügen der beiden Gehäuseteile 12, 14 einander in radialer Richtung mit geringem Abstand gegenüberliegen. Die beiden axial gerichteten Ringflächen 48, 54 liegen im zusammengesetzten Zustand aneinander an und legen somit die axiale Relativlage der Gehäuseteile 12, 14 bezüglich einander fest.

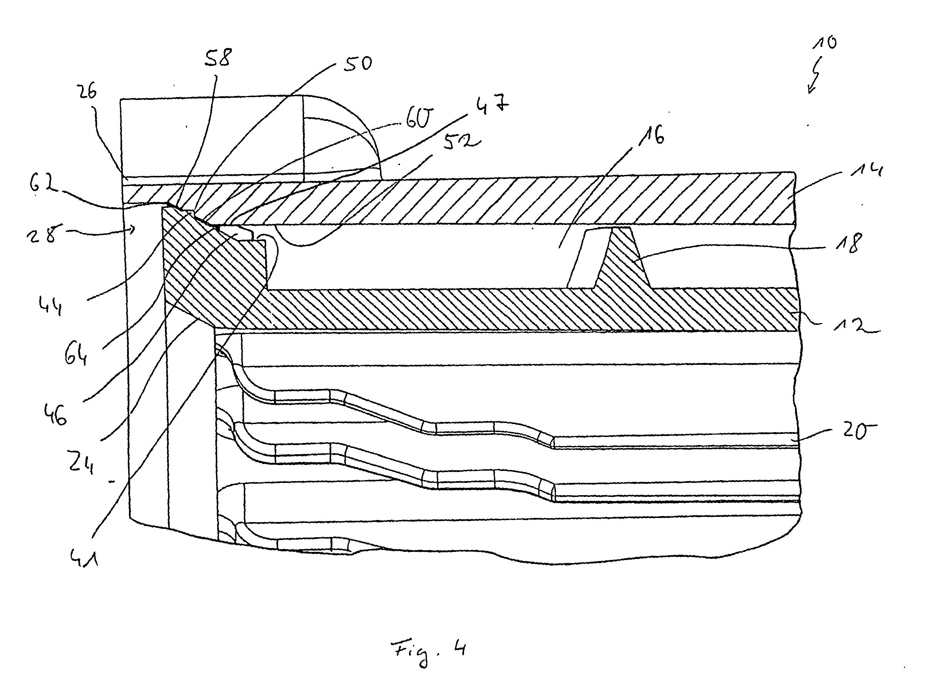

Am Gehäuseteil 12 sind ferner am Übergangsbereich zwischen der im Wesentlichen konisch ausgebildeten Verbindungsfläche 40 und einem axial an diese anschließenden zylindrischen Abschnitt 41 in Umfangsrichtung verteilt mehrere Zentrierstege 46 vorgesehen. Diese Zentrierstege 46 weisen in ihrem axialen Endbereich, mit welchem sie zunächst an das andere Gehäuseteil 14 heranbewegt werden, eine Einführschräge 43 auf, welche das ineinander Einführen der beiden Gehäuseteile 12, 14 erleichtert. In dem in Fig. 4 erkennbaren zusammengefügten Zustand liegen die Zentrierstege 46 mit einer Außenumfangsfläche 47 an der zylindrischen Innenumfangsfläche 52 des Gehäuseteils 14 im Wesentlichen spielfrei an. Es kann auf diese Art und Weise neben der vorangehend bereits angesprochenen Axialpositionierung der beiden Gehäuseteile 12, 14 bezüglich einander auch die Radialpositionierung, d. h. Zentrierung, sehr genau vorgegeben werden.

Die feste Verbindung der beiden Gehäuseteile 12, 14 sowie der fluiddichte Abschluss des Fluidströmungsraums 16 im Verbindungsbereich 28 wird bei dererfindungsgemäßen Wärmetauscheranordnung 10 durch einen Klebstoff erlangt. Vorzugsweise wird hier ein auf Silikonbasis aufgebauter und beispielsweise von der Firma LOCTlTE auch unter diesem Handelsnamen vertriebener Klebstoff eingesetzt. Dieser Klebstoff wird vor dem Ineinandereinsetzen der beiden Gehäuseteile 12, 14 auf zumindest eine der Verbindungsflächen 40, 42 aufgetragen. Bei dem in Fig. 3 dargestellten Beispiel ist der Klebstoff auf die am Gehäuseteil 14 vorgesehene Verbindungsfläche 42 beispielsweise unter Einsatz eines Dosierroboters aufgebracht worden. Insbesondere kann hier vorgesehen sein, dass an der durch die Axialpositionierausnehmung 50 unterbrochenen Verbindungsfläche 42 zwei voneinander getrennt ausgebildete, jeweils vollständig, ringartig um die Längsachse L umlaufende Klebstoffbereiche aufgebracht werden. Durch das Aussparen des Klebstoffs im Bereich der Axialpositionierausnehmung 50 und somit auch im Bereich des in diese dann eingreifenden Zentriervorsprungs 44 wird sichergestellt, dass diese beiden Bereiche mit sehr guter Passung gefertigt und ineinander eingefügt werden können, um eine sehr genaue Zentrierung zu erlangen. Es sei hier darauf hingewiesen, dass es selbstverständlich auch möglich ist, im Bereich der Axialpositionierausnehmung 50 bzw. im Bereich des Axialpositioniervorsprungs 44 Klebstoff aufzutragen, so dass im Wesentlichen nach dem Zusammenfügen der beiden Gehäuseteile 12, 14 ein einziger ringartig durchgehender Klebstofflagenbereich gebildet ist. Die Aufbringung des Klebstoffs erfolgt in demjenigen Bereich der miteinander in Wechselwirkung tretenden Verbindungsflächen 40, 42, in welchem die Zentriervorsprünge 46 nicht vorhanden sind, so dass ein in Umfangsrichtung im Wesentlichen durchgehender raupenartiger Klebstoffauftrag möglich ist.

Nach dem Aufbringen des Klebstoffs werden dann die beiden Gehäuseteile 12, 14 in Richtung der Längsachse L bezüglich einander solange verschoben, bis sie in ihre in Fig. 4 erkennbare fertige Montagelage bezüglich einander gebracht sind. In diesem Zustand greift dann der Axialpositioniervorsprung 44 in die Axialpositionierausnehmung 50 im Wesentlichen vollständig ein und es sind zwei durch den Axialpositioniervorsprung 44 bzw. die Axialpositionierausnehmung 50 voneinander getrennte Klebstofflagenbereiche 58, 60 gebildet, die jedoch zum Bilden eines vollständig dichten Abschlusses des Fluidströmungsraums 16 in Umfangsrichtung um die Längsachse L, d.h. in Umfangsrichtung entlang der beiden einander nunmehr gegenüber liegenden Verbindungsflächen 40, 42, vollständig durchlaufend sind. Nach dem Aushärten bilden diese Klebstofflagenbereiche 58, 60 neben dem bereits angesprochenen fluiddichten Abschluss einen stabilen mechanischen Zusammenhalt der beiden Gehäuseteile 12, 14, wobei aufgrund der auch nach dem Aushärten vorhandenen Elastizität des Klebstoffs Erschütterungen nicht zu einem Losbrechen.der beiden Gehäuseteile 12, 14 voneinander führen können. In dem in Fig. 4 dargestellten Zustand, in dem die beiden Gehäuseteile 12, 14 miteinander verbunden sind, liegen also die Zentrierstege 46 außerhalb des Verbindungsbereichs 28, d. h. desjenigen Bereichs, in welchen die beiden Klebstofflagenbereiche 58, 60 wirksam sind.

Beim Ineinandereinfügen der beiden Gehäuseteile 12, 14 tritt auch aufgrund der konischen Ausgestaltung der beiden Verbindungsflächen 40, 42 eine Verteilung des auf zumindest eine dieser Verbindungsflächen 40, 42 aufgebrachten zunächst noch fließfähigen Klebstoffs auf. Die Folge davon ist, dass in den beiden Endbereichen des Verbindungsbereichs 28 wulstförmige Klebstoffansammlungen 62, 64 gebildet werden. Diese wulstförmigen Klebstoffansammlungen 62, 64 liegen genau in denjenigen Bereichen, in welchen die Oberflächen der beiden Gehäuseteile 12, 14 auseinanderlaufen, und sorgen somit neben einem weiter verbesserten Zusammenhalt für eine ebenso verbesserte Dichtigkeit. Um auch die wulstförmige Klebstoffansammlung 64 mit in Umfangsrichtung ununterbrochener Konfiguration bereitstellen zu können, ist es beispielsweise auch möglich, die Zentriervorsprünge 46 in axialer Richtung verkürzt auszugestalten, so dass sie im Wesentlichen nur im Bereich des an die Verbindungsfläche 40 anschließenden Zylindrischen Flächenbereich des Gehäuseteils 12 vorhanden sind.

Durch die erfindungsgemäße Art und Weise der Verbindung zweier Gehäuseteile einer Wärmetauscheranordnung miteinander wird dafür gesorgt, dass der Herstellungsvorgang der einzelnen Gehäuseteile, welche im Allgemeinen aus Metall in einem Druckgussverfahren erzeugt werden, vereinfacht werden kann, da die im Druckgussverfahren erreichbare Fertigungspräzision bei Einsatz eines möglicherweise vorhandene Fertigungsungenauigkeiten ausgleichenden Klebstoffs ausreichend ist. Eine nachfolgende materialabhebende Bearbeitung der beiden Gehäuseteile ist nicht zwingend. Des Weiteren wird aufgrund der im noch nicht ausgehärteten Zustand vorhandenen Fließfähigkeit des eingesetzten Klebstoffs dafür gesorgt, dass dieser beim Zusammenfügen sich über die miteinander in Verbindung zu bringenden Verbindungsflächen sehr gleichmäßig verteilt. Die Folge davon ist eine sehr gleichmäßige mechanische Verbindung der beiden Gehäuseteile miteinander und eine ebenso gleichmäßige und sichere Abdichtung des zwischen den beiden Gehäuseteilen eingeschlossenen Fluidströmungsraums.

Es sei noch einmal darauf hingewiesen, dass die erfindungsgemäße Vorgehensweise des Verbindens zweier Gehäuseteile einer Wärmetauscheranordnung miteinander unter Einsatz von Klebstoff in verschiedenen Bereichen variiert werden kann. So können, wie bereits ausgeführt, mehrere in Umfangsrichtung aufeinander folgend angeordnete diskrete Zentriervorsprünge bzw. diesen zugeordnete Zentrierausnehmungen vorgesehen sein. Der Klebstoff kann bei Vorsehen von Zentriervorsprüngen bzw. Zentrierausnehmungen über diese hinweg aufgetragen werden oder auch nur beidseits dieser der Zentrierung dienenden Mittel aufgebracht werden. Selbstverständlich ist es auch möglich, den Klebstoff auf die nach außen hin weisende Verbindungsfläche des inneren Gehäuseteils aufzubringen, was den Vorgang des Aufbringens von Klebstoff erleichtert. Vor allem in diesem Falle kann dann vorteilhafterweise der Klebstoff nur auf den in der Einschubrichtung des Gehäuseteiles 12 dem Axialpositioniervorsprung 44 voran laufenden und nachfolgend den Klebstoffbereich 60 tragenden Bereich der Verbindungsfläche 42 aufgetragen werden, wobei dieser Klebstoffauftrag sich dann auch bis in den Bereich des Axialpositioniervorsprungs 44 erstrecken kann. Das Aufbringen auf die nach innen liegende Verbindungsfläche des äußeren Gehäuseteils hat den Vorteil, dass die Gefahr der Anlagerung von Verunreinigungen an den noch nicht ausgehärteten Klebstoff gemindert werden kann. Selbstverständlich ist es auch möglich, auf die beiden miteinander in Kontakt zu bringenden Verbindungsflächen Klebstoff aufzutragen, wobei in jedem Falle dieses Auftragen vorzugsweise derart erfolgt, dass eine unterbrechungsfreie Klebstofflage gebildet wird.

## Patentansprüche

1. Wärmetauscheranordnung für ein Fahrzeugheizgerät, umfassend zwei zwischen sich einen Fluidströmungsraum (16) begrenzende Gehäuseteile (12, 14), wobei in einem Verbindungsbereich (28) der beiden Gehäuseteile (12, 14) ein fluiddichter Abschluss des Fluidströmungsraums (16) vorgesehen ist und die beiden Gehäuseteile (12, 14) in dem Verbindungsbereich (28) durch Klebstoff miteinander verbunden sind,
wobei der Verbindungsbereich (28) an einem (14) der Gehäuseteile (12, 14) eine erste Verbindungsfläche (42) umfasst, welcher eine zweite Verbindungsfläche (40) des anderen (14) der Gehäuseteile (12, 14) unter Zwischenlagerung des Klebstoffs gegenüber liegt,
wobei die beiden Gehäuseteile (12, 14) wenigstens bereichsweise ineinander eingesetzt sind und die erste Verbindungsfläche (42) eine Innenumfangsfläche ist und die zweite Verbindungsfläche (40) eine Außenumfangsfläche ist,
wobei Axialpositioniermittel (44, 50) vorgesehen sind zum Vorgeben einer - bezogen auf eine Längsachse (L) der Gehäuseteile (12, 14) - vorbestimmten Relativaxiallage der Gehäuseteile (12, 14),
wobei die Axialpositioniermittel (44, 50) an einem der Gehäuseteile (12, 14) einen - bezogen auf die Längsachse (L) der Gehäuseteile (12, 14) - vorzugsweise vollständig umlaufenden Positioniervorsprung (44) und an dem anderen der Gehäuseteile (12, 14) eine - bezogen auf die Längsachse (L) der Gehäuseteile (12, 14) - vorzugsweise vollständig umlaufende Positioniereinsenkung (50) umfassen,
**dadurch gekennzeichnet,**
**dass** die erste Verbindungsfläche (42) und die zweite Verbindungsfläche (40) sich in Richtung einer Längsachse (L) der Gehäuseteile (12, 14) verjüngend ausgebildet sind und
**dass** durch die Axialpositioniermittel (44, 50) der im Verbindungsbereich (28) vorgesehene Klebstoff in zwei voneinander getrennte, im Umfangsrichtung vollständig durchlaufende Klebstofflagenbereiche (58, 60) unterteilt ist.

2. Wärmetauscheranordnung nach Anspruch 1, wobei bei dem dem Fluidströmungsraum (16) näher liegenden Klebstofflagenbereich in dem dem Fluidströmungsraum (16) nahen Endbereich des Verbindungsbereichs (28) eine wulstförmige Klebstoffansammlung (64) gebildet ist.

3. Wärmetauscheranordnung nach Anspruch 1 oder 2, wobei der Klebstoff nach dem Aushärten elastisch ist.

4. Wärmetauscheranordnung nach einem der Ansprüche 1 bis 3, wobei der Klebstoff auf Silikonbasis aufgebaut ist.

5. Wärmetauscheranordnung nach einem der Ansprüche 1 bis 4, wobei an wenigstens einem der Gehäuseteile (12, 14) Zentriermittel (46) vorgesehen sind, welche mit Gegen-Zentriermitteln (52) an dem anderen der Gehäuseteile (12, 14) zum Zentrieren der beiden Gehäuseteile (12, 14) bezüglich einander zusammenwirken.

6. Wärmetauscheranordnung nach Anspruch 5, wobei die Zentriermittel (46) wenigstens einen Zentriervorsprung (46) umfassen.

7. Wärmetauscheranordnung nach Anspruch 6, wobei in Umfangsrichtung - bezogen auf eine Längsachse (L) der Gehäuseteile (12, 14) - mehrere Zentriervorsprünge (46) aufeinander folgen.

8. Wärmetauscheranordnung nach Anspruch 5 oder Anspruch 6, wobei die Gegen-Zentriermittel (52) eine Anlageoberfläche (52) für den wenigstens einen Zentriervorsprung (46) umfassen.

9. Wärmetauscheranordnung nach einem der Ansprüche 5 bis 7, wobei die Gegen-Zentriermittel (52) wenigstens einen Zylinderflächenbereich (52) bereitstellen.

10. Verfahren zum Zusammenbau einer Wärmetauscheranordnung (10) für ein Fahrzeugheizgerät, welche Wärmetauscheranordnung (10) zwei zwischen sich einen Fluidströmungsraum (16) begrenzende Gehäuseteile (12, 14) umfasst, die in einem Verbindunsgsbereich (28) mit jeweiligen Verbindungsflächen (40, 42) einander gegenüber liegend positioniert oder zu positionieren sind, optional mit einem oder mehreren der in den vorangehenden Ansprüchen angegebenen Merkmale, wobei das Verfahren umfasst: das Aufbringen von Klebstoff auf die Verbindungsfläche (40, 42) von wenigstens einem der Gehäuseteile (12, 14) zur Ausbildung von zwei voneinander getrennten, in Umfangsrichtung vollständig durchlaufenden Klebstofflagenbereichen (58, 60) im Verbindungsbereich (28) und darauf folgend das Zusammenfügen der Gehäuseteile (12, 14), bis im Verbindungsbereich (28) zwischen den beiden Klebstofflagenbereichen (58, 60) vorgesehene Axialpositionierungsmittel (44, 50), die einen - bezogen auf die Längsachse (L) der Gehäuseteile (12, 14) - vorzugsweise vollständig umlaufenden Positionierungsvorsprung (44) und am anderen der Gehäuseteile (12, 14) eine - bezogen auf die Längsachse (L) der Gehäuseteile (12, 14) - vorzugsweise vollständig umlaufende Positionierungseinsenkung (50) umfassen, im Wesentlichen vollständig ineinandergreifen und die beiden Verbindungsflächen (40, 42) einander unter Zwischenlagerung des Klebstoffs gegenüber liegen, wobei bei dem dem Fluidströmungsraum (16) nahen Endbereich des Verbindungsbereichs (28) eine wulstförmige Klebstoffansammlung (64) gebildet wird.

## Claims

1. Heat exchanger assembly for a vehicle heater, comprising two housing parts (12, 14) which between them delimit a fluid flow space (16), a fluid-tight closure of the fluid flow space (16) being provided in a connecting region (28) of the two housing parts (12, 14) and the two housing parts (12, 14) being connected to one another in the connecting region (28) by means of adhesive,
the connecting region (28) comprising a first connecting face (42) on one (12) of the housing parts (12, 14), which connecting face (42) lies opposite a second connecting face (40) of the other one (14) of the housing parts (12, 14), the adhesive being situated in between,
the two housing parts (12, 14) being inserted into one another, at least in regions, and the first connecting face (42) being an inner circumferential face and the second connecting face (40) being an outer circumferential face,
axial positioning means (44, 50) being provided to prescribe a predefined relative axial position of the housing parts (12, 14) relative to a longitudinal axis (L) of the housing parts (12, 14),
the axial positioning means (44, 50) comprising a preferably completely encircling positioning projection (44), relative to the longitudinal axis (L) of the housing parts (12, 14), on one of the housing parts (12, 14), and a preferably completely encircling positioning depression (50), relative to the longitudinal axis (L) of the housing parts (12, 14), on the other one of the housing parts (12, 14),
**characterized**
**in that** the first connecting face (42) and the second connecting face (40) are formed so that they narrow in the direction of a longitudinal axis (L) of the housing parts (12, 14) and
**in that** the adhesive provided in the connecting region (28) is divided by means of the axial positioning means (44, 50) into two adhesive deposit regions (58, 60) which are separate from one another and are completely continuous in the circumferential direction.

2. Heat exchanger assembly according to Claim 1, wherein a bead-shaped adhesive accumulation (64) is formed at the adhesive deposit region, situated nearest the fluid flow space (16), in the connecting region (28) end region near the fluid flow space (16).

3. Heat exchanger assembly according to Claim 1 or 2, wherein the adhesive is elastic after curing.

4. Heat exchanger assembly according to one of Claims 1 to 3, wherein the adhesive is silicone-based.

5. Heat exchanger assembly according to one of Claims 1 to 4, wherein centring means (46) are provided on at least one of the housing parts (12, 14), which centring means (46) interact with mating centring means (52) on the other one of the housing parts (12, 14) in order to centre the two housing parts (12, 14) with respect to one another.

6. Heat exchanger assembly according to Claim 5, wherein the centring means (46) comprise at least one centring projection (46).

7. Heat exchanger assembly according to Claim 6, wherein a plurality of centring projections (46) are arranged successively in the circumferential direction relative to a longitudinal axis (L) of the housing parts (12, 14).

8. Heat exchanger assembly according to Claim 5 or Claim 6, wherein the mating centring means (52) comprise a bearing surface (52) for the at least one centring projection (46).

9. Heat exchanger assembly according to one of Claims 5 to 7, wherein the mating centring means (52) provide at least one cylindrical face region (52).

10. Method for assembling a heat exchanger assembly (10) for a vehicle heater, which heat exchanger assembly (10) comprises two housing parts (12, 14) which between them delimit a fluid flow space (16), are positioned or are to be positioned with respective connecting faces (40, 42) lying opposite one another in a connecting region (28) and optionally have one or more of the features specified in the preceding claims, wherein the method comprises: applying adhesive to the connecting face (40, 42) of at least one of the housing parts (12, 14) in order to form two adhesive deposit regions (58, 60), which are separate from one another and are completely continuous in the circumferential direction, in the connecting region (28), and subsequently joining the housing parts (12, 14) together until axial positioning means (44, 50), which are provided in the connecting region (28) between the two adhesive deposit regions (58, 60) and which comprise a preferably completely encircling positioning projection (44), relative to the longitudinal axis (L) of the housing parts (12, 14), and a preferably completely encircling positioning depression (50), relative to the longitudinal axis (L) of the housing parts (12, 14), on the other one of the housing parts (12, 14), engage in one another substantially completely and the two connecting faces (40, 42) lie opposite one another with the adhesive situated in between, a bead-shaped adhesive accumulation (64) being formed at the connecting region (28) end region near the fluid flow space (16).

## Revendications

1. Ensemble d'échangeur de chaleur pour un dispositif de chauffage de véhicule, comprenant deux parties de boîtier (12, 14) délimitant entre elles une chambre d'écoulement de fluide (16), dans lequel il est prévu, dans une région d'assemblage (28) des deux parties de boîtier (12, 14), une fermeture étanche au fluide de la chambre d'écoulement de fluide (16) et les deux parties de boîtier (12, 14) sont assemblées l'une à l'autre par une colle dans la région d'assemblage (28), dans lequel la région d'assemblage (28) comprend, sur une (14) des parties de boîtier (12, 14), une première face d'assemblage (42), à laquelle est opposée une deuxième face d'assemblage (40) de l'autre (14) des parties de boîtier (12, 14) avec interposition de la colle, dans lequel les deux parties de boîtier (12, 14) sont engagées au moins localement l'une dans l'autre et la première face d'assemblage (42) est une face périphérique intérieure et la deuxième face d'assemblage (40) est une face périphérique extérieure, dans lequel il est prévu des moyens de positionnement axial (44, 50) pour prédéterminer - par rapport à un axe longitudinal (L) des parties de boîtier (12, 14) - une position axiale relative des parties de boîtier (12, 14), dans lequel les moyens de positionnement axial (44, 50) comprennent sur une des parties de boîtier (12, 14) - par rapport à l'axe longitudinal (L) des parties de boîtier (12, 14) - une saillie de positionnement (44) de préférence entièrement périphérique et sur l'autre des parties de boîtier (12, 14) - par rapport à l'axe longitudinal (L) des parties de boîtier (12, 14) - une saignée (50) de préférence entièrement périphérique, **caractérisé en ce que** la première face d'assemblage (42) et la deuxième face d'assemblage (40) se rétrécissent dans la direction d'un axe longitudinal (L) des parties de boîtier (12, 14), et **en ce que** la colle prévue dans la région d'assemblage (28) est divisée par les moyens de positionnement (44, 50) en deux régions de couche de colle (58, 60) séparées l'une de l'autre et entièrement continues en direction périphérique.

2. Ensemble d'échangeur de chaleur selon la revendication 1, dans lequel une accumulation de colle en forme de bourrelet (64) est formée par la région de couche de colle située le plus près de la chambre d'écoulement de fluide (16) dans la région d'extrémité de la région d'assemblage (28) proche de la chambre d'écoulement de fluide (16).

3. Ensemble d'échangeur de chaleur selon la revendication 1 ou 2, dans lequel la colle est élastique après sa prise.

4. Ensemble d'échangeur de chaleur selon l'une quelconque des revendications 1 à 3, dans lequel la colle est fabriquée à base de silicone.

5. Ensemble d'échangeur de chaleur selon l'une quelconque des revendications 1 à 4, dans lequel il est prévu sur au moins une des parties de boîtier (12, 14) des moyens de centrage (46), qui coopèrent avec des moyens de centrage opposés (52) sur l'autre des parties de boîtier (12, 14) pour le centrage des deux parties de boîtier (12, 14) l'une par rapport à l'autre.

6. Ensemble d'échangeur de chaleur selon la revendication 5, dans lequel les moyens de centrage (46) comprennent au moins une saillie de centrage (46).

7. Ensemble d'échangeur de chaleur selon la revendication 6, dans lequel plusieurs saillies de centrage (46) se succèdent en direction périphérique - par rapport à un axe longitudinal (L) des parties de boîtier (12, 14).

8. Ensemble d'échangeur de chaleur selon la revendication 5 ou la revendication 6, dans lequel les moyens de centrage opposés (52) comprennent une surface d'appui (52) pour au moins une saillie de centrage (46).

9. Ensemble d'échangeur de chaleur selon l'une quelconque des revendications 5 à 7, dans lequel les moyens de centrage opposés (52) forment au moins une région de surface cylindrique (52).

10. Procédé pour l'assemblage d'un ensemble d'échangeur de chaleur (10) pour un appareil de chauffage de véhicule, ensemble d'échangeur de chaleur (10) qui comprend deux parties de boîtier (12, 14) délimitant entre elles une chambre d'écoulement de fluide (16), qui sont ou doivent être positionnées en face l'une de l'autre dans une région d'assemblage (28) avec des faces d'assemblage respectives (40, 42), en option avec une ou plusieurs des caractéristiques indiquées dans les revendications précédentes, dans lequel le procédé comprend: le dépôt de colle sur la face d'assemblage (40, 42) d'au moins une des parties de boîtier (12, 14) pour former deux régions de couche de colle (58, 60) séparées l'une de l'autre et entièrement continues en direction périphérique dans la région d'assemblage (28) et ensuite la jonction des parties de boîtier (12, 14), jusque des moyens de positionnement axial (44, 50) prévus dans la région d'assemblage (28) entre les deux régions de couche de colle (58, 60), qui comprennent - par rapport à l'axe longitudinal (L) des parties de boîtier (12, 14) - une saillie de positionnement (44) de préférence entièrement périphérique et sur l'autre des parties de boîtier (12, 14) - par rapport à l'axe longitudinal (L) des parties de boîtier (12, 14) - une saignée (50) de préférence entièrement périphérique, s'engagent sensiblement complètement l'une dans l'autre et les deux faces d'assemblage (40, 42) sont opposées l'une à l'autre avec interposition de la colle, dans lequel une accumulation de colle en forme de bourrelet (64) est formée par la région d'extrémité de la région d'assemblage (28) proche de la chambre d'écoulement de fluide (16).
